# EUROPÄISCHE PATENTSCHRIFT

(11) **EP 1 166 412 B1**
(45) Veröffentlichungstag und Bekanntmachung des Hinweises auf die Patenterteilung: **19.02.2003**
(21) Anmeldenummer: 00929237.6
(22) Anmeldetag: 24.03.2000
(51) Int. Cl.: H02B 1/052

(54) **GERÄTEANORDNUNG**
ARRANGEMENT OF DEVICES
AGENCEMENT D'APPAREILS

(30) Priorität: 06.04.1999 DE 19915375
(43) Veröffentlichungstag der Anmeldung: 02.01.2002
(73) Patentinhaber: SIEMENS AKTIENGESELLSCHAFT, 80333 München (DE)
(72) Erfinder: LEITL, Wolfgang, D-93173 Wenzenbach (DE)
(86) Internationale Anmeldenummer: DE0000905
(87) Internationale Veröffentlichungsnummer: WO00060712

(56) Entgegenhaltungen:
- EP-A- 0 327 708
- DE-A- 4 210 556

## Beschreibung

Die Erfindung bezieht sich auf eine Geräteanordnung mit einer Anzahl von Reiheneinbaugeräten, die jeweils mittels eines mit einer Schieberbetätigung zusammenwirkenden Schnappschiebers auf eine Tragschiene aufschnappbar sind, wobei zur synchronen Betätigung mehrerer Schnappschieber deren Schieberbetätigungen miteinander koppelbar sind.

Als Reiheneinbaugerät wird üblicherweise ein ein- oder mehrpoliges Gerät bezeichnet, das auf eine Trag- oder Hutschiene aufgeschnappt werden kann. Zur Befestigung eines derartigen Reiheneinbaugerätes, z.B. eines Leitungsschutzschalters oder eines ähnlichen Schalt- und Steuergerätes, auf der genormten Trag- oder Hutschiene sind üblicherweise ein oder mehrere Schnappschieber vorgesehen, von denen jeder in der Halteverbindung des Gerätes mit der Tragschiene einen Tragschienenrand hintergreift.

Aus der DE 297 103 10 U1 ist es zum Lösen dieser Halteverbindung bekannt, den Schnappschieber nach Art eines Kniegelenks mit einem Lösehebel zu koppeln. Beim Betätigen erfolgt eine Kraftumlenkung über den als Schieberbetätigung dienenden Lösehebel auf den damit zusammenwirkenden Schnappschieber. Die Schieberbetätigung ist dabei zweckmäßigerweise stegartig ausgebildet, wobei die Stege an eine Handhabe der Schieberbetätigung angeformte, zueinander beabstandete und parallel verlaufende Holme sind. Die derart ausgeformte Schieberbetätigung lässt somit zwischen den Stegen oder Holmen einen genügend breiten Anschlussraum für einen Klemmenanschluss frei.

Bei der bekannten Ausführung der Schieberbetätigung sind Verbindungselemente nach Art einer Nut- und Feder-Kontur vorgesehen, um eine Kopplung der in mehrpoligen Geräten nebeneinanderliegenden Schieberbetätigungen zu ermöglichen. Dadurch können die Schnappschieber bei mehrpoligen Geräten durch eine einzige Handhabung synchron betätigt werden. Mittels dieser Schieberanordnung können einzelne Geräte jedoch nur dann auf der Tragschiene verschoben, ausgerichtet oder von dieser gelöst werden, wenn diese separat oder in einem Mindestabstand zu benachbarten Geräten angeordnet sind. Bei einpoligen Geräten werden daher die seitlich überstehenden Federn der Schieberbetätigungen abgeschnitten. Analog werden bei mehrpoligen Geräten die Federn der Schieberbetätigungen der beiden äußeren Geräte abgetrennt. Dies ist jedoch aufgrund des zusätzlich erforderlichen Arbeitsschrittes äußerst unerwünscht.

Der Erfindung liegt daher die Aufgabe zugrunde, eine Geräteanordnung der eingangs genannten Art anzugeben, deren Schieberbetätigungen, insbesondere bei einem zwei-, drei- oder vierpoligen Reiheneinbaugerät, in besonders einfacher und zuverlässiger Art und Weise synchron betätigt werden können.

Diese Aufgabe wird erfindungsgemäß gelöst durch die Merkmale des Anspruchs 1. Dazu ist ein separates Koppelteil vorgesehen, das mit den zu koppelnden und somit synchron zu betätigenden Schieberbetätigungen verliersicher verbunden ist. Dabei ist das Koppelteil kammartig ausgebildet und weist einen quer zu einer Anzahl von Fügearmen verlaufenden und diese verbindenden Koppelsteg auf.

Durch die Bereitstellung eines derartigen, separaten Koppelteils ist auch eine nachträgliche Kopplung der Schieberbetätigungen von zwei-, drei-, vier- oder mehrpoligen Reiheneinbaugeräten ermöglicht. Die Kopplung der jeweiligen Schieberbetätigungen kann somit dann erfolgen, wenn die entsprechenden Geräte bereits auf die Tragschiene aufgeschnappt sind. Vorzugsweise werden die entsprechenden Geräte jedoch bereits werksseitig in einem Vormontageschritt mittels des Koppelteils hinsichtlich deren Schieberbetätigung synchronisiert, so dass vor Ort die gesamte Geräteanordnung oder Gerätegruppe auf die Tragschiene aufgesetzt werden kann. Andernfalls, d.h. bei ungekoppelten Geräten, sind deren Schieberbetätigungen auch dann einzeln betätigbar, wenn die Geräte unmittelbar und somit praktisch abstandlos nebeneinander angeordnet sind.

Die Verbindung zwischen dem Koppelteil und den Schieberbetätigungen kann eine lösbare Verbindung, z. B. eine Schraubverbindung oder eine Klipsverbindung, sein. Vorteilhafterweise ist jedoch zwischen dem Koppelteil und den zu koppelnden Schieberbetätigungen eine unlösbare Fügeverbindung vorgesehen. Die Fügeverbindung ist dabei zweckmäßigerweise eine kombinierte Steck- und Schnappverbindung.

Dazu ist in vorteilhafter Ausgestaltung bezüglich der Fügearme eine Steckverbindung mit der jeweiligen Schieberbetätigung und bezüglich des die Fügearme verbindenden Koppelstegs eine Schnappverbindung nach Art eines Rastgesperres mit den zu koppelnden Schieberbetätigungen vorgesehen. Hierzu ist vorteilhafterweise einerseits am Koppelsteg eine der Anzahl der zu koppelnden Schieberbetätigungen entsprechende Anzahl von Schnappelementen vorgesehen, die in der Fügeverbindung an der Schieberbetätigung vorgesehene Sperrkonturen hintergreifen. Andererseits weist die Schieberbetätigung eine Anlagekontur auf, die zu einer am Fügearm vorgesehenen Stützkontur komplementär ausgebildet ist. In der Fügeverbindung ist dann jeder über dessen Stützkontur an der Anlagekontur sich abstützende Fügearm in der jeweiligen Steckverbindung an der Schieberbetätigung lagefixiert. Auf diese Weise ist eine zuverlässige und damit sichere Fügeverbindung zwischen dem Koppelteil und den zu koppelnden Schieberbetätigungen realisiert.

Die in der Steckverbindung aneinanderliegenden Konturen an den Fügearmen des Koppelteils einerseits und an den korrespondierenden Schieberbetätigungen andererseits sind zweckmäßigerweise als Zentrierkonturen ausgebildet. Dazu sind die Konturen vorteilhafterweise unter Bildung eines Zentrierwinkels keilförmig oder V-förmig ausgeführt. Dabei ist der Zentrierwinkel der Anlagekontur der Schieberbetätigung größer als der Zentrierwinkel der Stützkontur des jeweiligen Fügearms.

Die zweckmäßigerweise bei allen Reiheneinbaugeräten gleichartig ausgeführten Schieberbetätigungen sind auch bei direkter, abstandsloser Aneinanderreihung mehrerer Geräte einzeln und damit unabhängig voneinander betätigbar. Dadurch kann jedes derart ausgebildete Reiheneinbaugerät sowohl als einpoliges Gerät als auch innerhalb einer mehrpoligen Geräteanordnung gleichermaßen eingesetzt werden.

Vorteilhafterweise ist die Schieberbetätigung jedes Reiheneinbaugerätes im Ausgangszustand im Bereich der Steckverbindung des Koppelteils oberhalb eines entsprechenden Fügeraumes mittels einer Membran verschlossen, die bei einer aus Kunststoff bestehenden Schieberbetätigung als Spritzhaut ausgeführt ist. Zur Herstellung der Fügeverbindung wird die Membran in einem ersten Fügeschritt mittels der Fügearme des Koppelteils durchschnitten oder durchstochen, wozu jeder Fügearm freiendseitig vorteilhafterweise mit einer angeformten, messerartigen Schneidenkontur versehen ist. Dabei ragt die quer zur Längsrichtung des Fügearms verlaufende und zweckmäßigerweise durch zwei Schneidarme gebildete Schneidenkontur über die V-förmige Stützkontur des Fügearms hinaus.

Zur Lagefixierung der Fügearme in der Steckverbindung weist jeder Fügearm eine Anformung in Form eines Querstegs auf, der freiendseitig und auf der der Stützkontur abgewandten Seite des Fügearms an diesen im Bereich zwischen den Schneidarmen angeformt ist. In der Fügeverbindung hintergreift dieser Quersteg des Fügearms einen an der Schieberbetätigung vorgesehenen Anschlag nach Art einer Hinterschneidung.

Um eine spielfreie synchrone Bewegung der gekoppelten Schieberbetätigungen und damit der mehrpoligen Schnappschieber sicherzustellen, weist das Koppelteil mindestens eine Klemmnase auf. Mittels der oder jeder Klemmnase wird in der Fügeverbindung das Koppelteil gegenüber der Schieberbetätigung in Längsrichtung des Fügearms und/oder quer hierzu vorgespannt. Das zur Herstellung der Fügeverbindung erforderliche Spiel zur Verrastung des Schnappelements wird dabei dadurch erzielt, dass die korrespondierende Sperrkontur der Schieberbetätigung derart verformbar ausgeführt ist, dass diese bei Krafteinwirkung über das Koppelteil dem entsprechenden, zweckmäßigerweise als Schnapphaken ausgeführten Schnappelement elastisch und rückfedernd ausweichen kann.

Zur Handhabung bei der synchronen Betätigung der Schnappschieber weist das Koppelteil zweckmäßigerweise eine wannenförmige, vorzugsweise mit Riffeln versehene Fingermulde als Handhabe auf, so dass mittels des Koppelteils in einfacher Weise alle mit den Schieberbetätigungen gekoppelten Schnappschieber der Geräteanordnung von Hand bewegt werden können. Darüber hinaus kann an die Handhabe ggf. ein Werkzeug, beispielsweise ein Schraubendreher, angesetzt werden.

Die mit der Erfindung erzielten Vorteile bestehen insbesondere darin, dass durch Bereitstellung eines separaten Koppelteils die Schieberbetätigungen einer Geräteanordnung mit einer entsprechenden Anzahl von Reiheneinbaugeräten in besonders einfacher Art und Weise miteinander gekoppelt und damit die mit diesen zusammenwirkenden Schnappschieber synchron betätigt werden können. Andererseits können dieselben Schieberbetätigungen auch bei einpoligen Geräten vorgesehen sein. Die mit einer derartigen Schieberbetätigung ausgeführten Reiheneinbaugeräte sind daher bei gleichzeitig geringer Lagerhaltung bei der Herstellung der Geräte sowohl einzeln als auch - unter Verwendung weiterer, für mehrpolige Geräte erforderlicher Einzel- oder Zusatzteile - in einer mehrpoligen Geräteanordnung einsetzbar.

Des weiteren ist das Koppelteil auch in einer eng bestückten Verteilung mehrerer Reiheneinbaugeräte stets besonders einfach zugänglich, da die Handhabungspunkte am vorderen zugänglichen Bereich der Reiheneinbaugeräte liegen. Durch die in Folge der Vorspannung des Koppelteils gegenüber der Schieberbetätigungen vorteilhafterweise spielfreie Fügeverbindung ist ein Hubverlust der Schieberbetätigungen durch eine Verformung des Koppelteils praktisch vermieden. Dies kann dadurch besonders vorteilhaft beeinflusst werden, dass das Koppelteil einen biegesteifen Querschnitt aufweist und beispielsweise aus einem hochglasgefüllten Material besteht. Hierzu eignet sich besonders ein glasfaserverstärkter Kunststoff mit einem Glasfaseranteil von vorzugsweise 50%.

Durch die in der Fügeverbindung des Koppelteils mit der Schieberbetätigung aneinanderliegenden Wirkflächen der Schnappverbindung einerseits und der zweckmäßigerweise als Zentrierflächen ausgebildeten Stützkonturen in der Steckverbindung andererseits ist eine gezielte Krafteinleitung in die einzelnen Schieberbetätigungen sowohl beim Lösen und damit beim Entriegeln der mit diesen zusammenwirkenden Schnappschieber als auch bei deren Verriegelung an der Tragschiene ermöglicht. Das Koppelteil ermöglicht in der Fügeverbindung mit den Schieberbetätigungen dabei eine besonders leichtgängige sowie fingerfreundliche und damit eine werkzeuglose Betätigung der Schnappschieber. Die Leichtgängigkeit der Öffnungs- und Schließbewegungen ist durch Vermeidung zusätzlicher Reibung in der Führung der Schieberbetätigungen infolge symmetrischer Krafteinleitung sichergestellt.

Aufgrund der zweckmäßigerweise unlösbaren Fügeverbindung, die einerseits durch eine lagefixierte Steckverbindung mit Hinterschneidung und andererseits durch eine Schnappverbindung realisiert ist, ist eine ungewollte Demontage sicher vermieden. Die Fügeverbindung ist dabei abfalllos und ohne Zusatzwerkzeuge in einfacher Weise herstellbar. Die entsprechende Montage des Koppelteils auf die mehrpoligen Geräte ist auch automatisierbar.

Die Fügeverbindung ist durch Einstecken und anschließendes Einschnappen des Koppelteils in die Schieberbetätigungen in konstruktiv und montagetechnisch einfacher und somit kostengünstiger Weise möglich, da ein Vorlochen der Schieberbetätigungen aufgrund der an den Fügearmen des Koppelteils angeformten Schneidenflächen oder -konturen entfällt. Da die Öffnung für die Steckverbindung des Koppelteils erst während des Montagevorgangs durch Durchtrennen der an den Schieberbetätigungen vorgesehenen Membranen erzeugt wird, ist bei einem einpoligen Gerät die Öffnung stets verschlossen, so dass keine Verunreinigungen in das Gerät eindringen können.

Nachfolgend werden Ausführungsbeispiele der Erfindung anhand einer Zeichnung näher erläutert. Darin zeigen:
- FIG 1: in perspektivischer Darstellung eine mehrpolige Geräteanordnung mit vier Reiheneinbaugeräten mit über ein Koppelteil synchron bedienbaren Schieberbetätigungen in Schließstellung,
- FIG 2: in einer Seitenansicht die auf eine Tragschiene aufgeschnappte Geräteanordnung gemäß FIG 1,
- FIG 3: in einer Darstellung gemäß FIG 1 die Geräteanordnung mit den gekoppelten Schieberbetätigungen in Öffnungsstellung,
- FIG 4: in einer Darstellung gemäß FIG 2 die von der Tragschiene einseitig gelöste Geräteanordnung,
- FIG 5a bis 5c: in perspektivischer Darstellung ein Koppelteil für eine zwei-, drei- bzw. vierpolige Geräteanordnung mit einer der Polzahl entsprechenden Anzahl von an einen Koppelsteg angeformten Fügearmen,
- FIG 6: einen Ausschnitt VI aus FIG 5c in größerem Maßstab mit einem eine Stützkontur und eine Schneidkontur aufweisenden Fügearm,
- FIG 7: das Koppelteil gemäß FIG 5c in einer Rückseitenansicht,
- FIG 8: einen Ausschnitt VIII aus FIG 7 in größerem Maßstab mit an den Koppelsteg angeformten Schnapphaken und Klemmnasen,
- FIG 9: einen weiteren Ausschnitt IX aus FIG 7 in größerem Maßstab mit einem an den Fügearm angeformten Quersteg,
- FIG 10: ausschnittweise das Koppelteil gemäß den Figuren 5 bis 9 mit V-förmiger Stützkontur am Fügearm in Vorderansicht,
- FIG 11: eine Schnittdarstellung des Koppelteils entlang der Linie XI-XI in FIG 10,
- FIG 12: eine andere Schnittdarstellung des Koppelteils entlang der Linie XII-XII in FIG 10,
- FIG 13: ausschnittweise eine Schieberbetätigung in Vorderansicht,
- FIG 14: die Schieberbetätigung in einer Schnittdarstellung entlang der Linie XIV-XIV aus FIG 13,
- FIG 15: in einer Vorderansicht das Koppelteil und die Schieberbetätigung in einem ersten Fügeschritt,
- FIG 16: den ersten Fügeschritt in einer perspektivischen Schnittdarstellung entlang der Linie XVI-XVI in FIG 15,
- FIG 17: die Schnittdarstellung des ersten Fügschritts,
- FIG 18: einen Ausschnitt XVIII aus FIG 17 in größerem Maßstab mit an einer geschlossenen Membran der Schieberbetätigung anliegender Schneidenkontur des Koppelteils,
- FIG 19: in einer Darstellung gemäß FIG 15 ein an der Schieberbetätigung zentrierter Fügearm des Koppelteils,
- FIG 20: in einer perspektivischen Schnittdarstellung entlang der Linie XX-XX in FIG 19 die Zentrierung und eine Hinterschneidung des Fügearms des Koppelteils,
- FIG 21: die Schnittdarstellung gemäß FIG 20,
- FIG 22: in einem Ausschnitt XXII aus FIG 21 in größerem Maßstab die Hinterschneidung des Fügearms,
- FIG 23: in einer perspektivischen Schnittdarstellung gemäß den Figuren 16 und 20 im Anschluss an einen zweiten Fügeschritt die Fügeverbindung zwischen dem Koppelteil und der Schieberbetätigung, und
- FIG 24: die Fügeverbindung gemäß FIG 23 in der Schnittdarstellung.

Einander entsprechende Teile sind in allen Figuren mit den gleichen Bezugszeichen versehen.

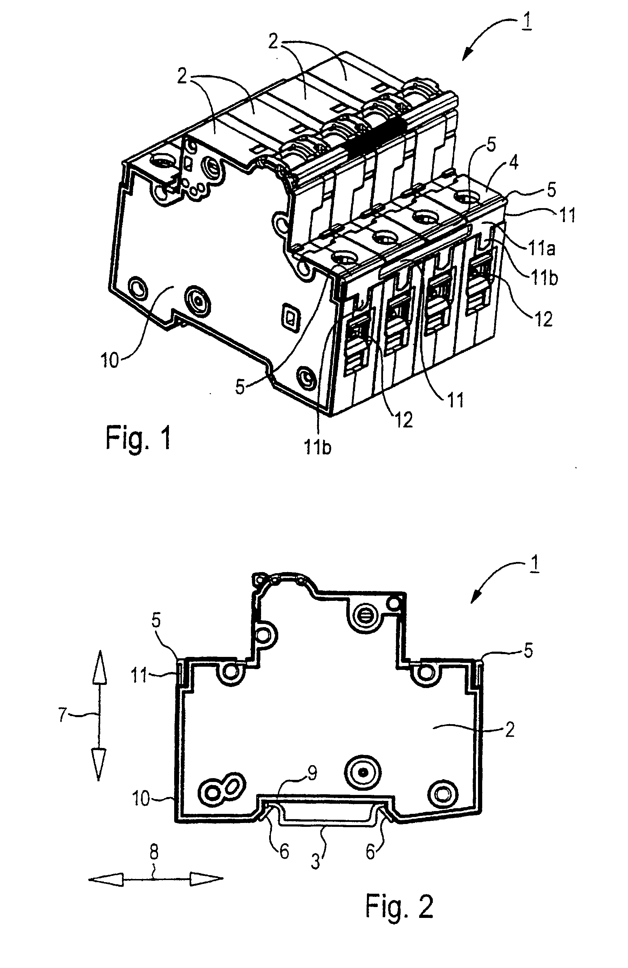

Die Figuren 1 bis 4 zeigen eine 4-polige Geräteanordnung 1 als Beispiel für eine mehrpolige Anordnung mit vier aneinandergereihten Reiheneinbaugeräten 2, die gemeinsam auf eine Tragschiene 3 aufsetzbar sind. Jedes Reiheneinbaugerät 2 weist beidseitig eine von dessen Oberseite 4 her bedienbare Schieberbetätigung 5 auf, die jeweils mit einem Schnappschieber 6 (FIG 2) zusammenwirkt.

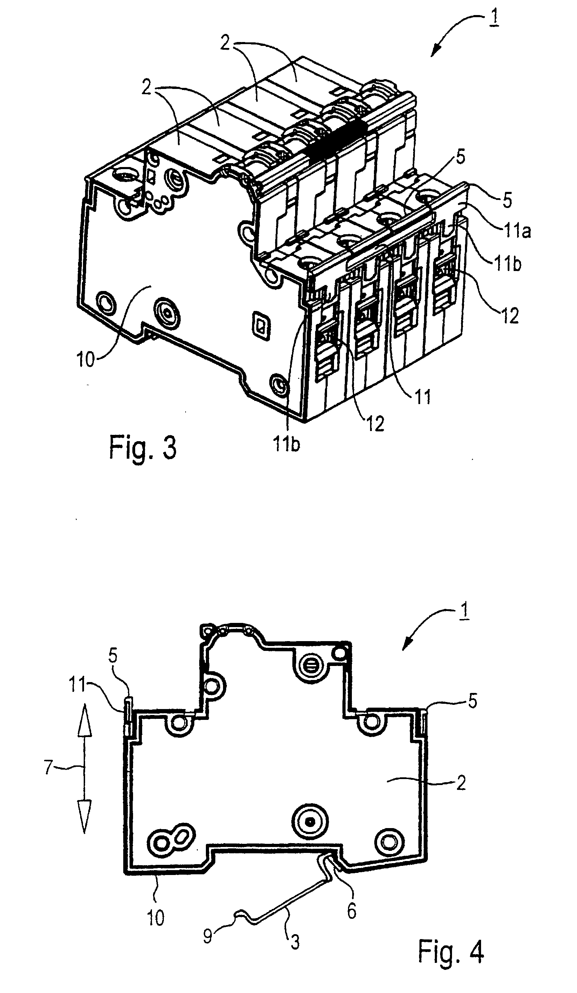

Die Kopplung jeder Schieberbetätigung 5 des jeweiligen Reiheneinbaugerätes 2 mit dem zugehörigen Schnappschieber 6 ist vorzugsweise nach Art einer Kniegelenkkupplung realisiert, wie diese in dem deutschen Gebrauchsmuster DE 297 10 310 U1 dargestellt und beschrieben ist. Die Kupplung ist dabei derart realisiert, dass durch Verschieben der Schieberbetätigung 5 in Betätigungsrichtung 7 infolge der Kraftumlenkung eine dazu in Querrichtung 8 verlaufende Schieberbewegung des Schnappschiebers 6 erfolgt. Im verriegelten Zustand gemäß FIG 2 hintergreift der Schnappschieber 6 einen Tragschienenrand 9 der Tragschiene 3. In der in den Figuren 3 und 4 dargestellten Öffnungsstellung der oder jeder Schieberbetätigung 5, die durch Ziehen der Schieberbetätigung 5 in Betätigungsrichtung 7 zur Oberseite 4 hin erfolgt, gleitet der entsprechende Schnappschieber 6 in das Gerätegehäuse 10 des Reiheneinbaugerätes 2 hinein, so dass der Hintergriff am Tragschienenrand 9 gelöst ist und auch ein einzelnes Reiheneinbaugerät 2 auf der Tragschiene 2 verschoben oder von dieser abgehoben werden kann (FIG 4).

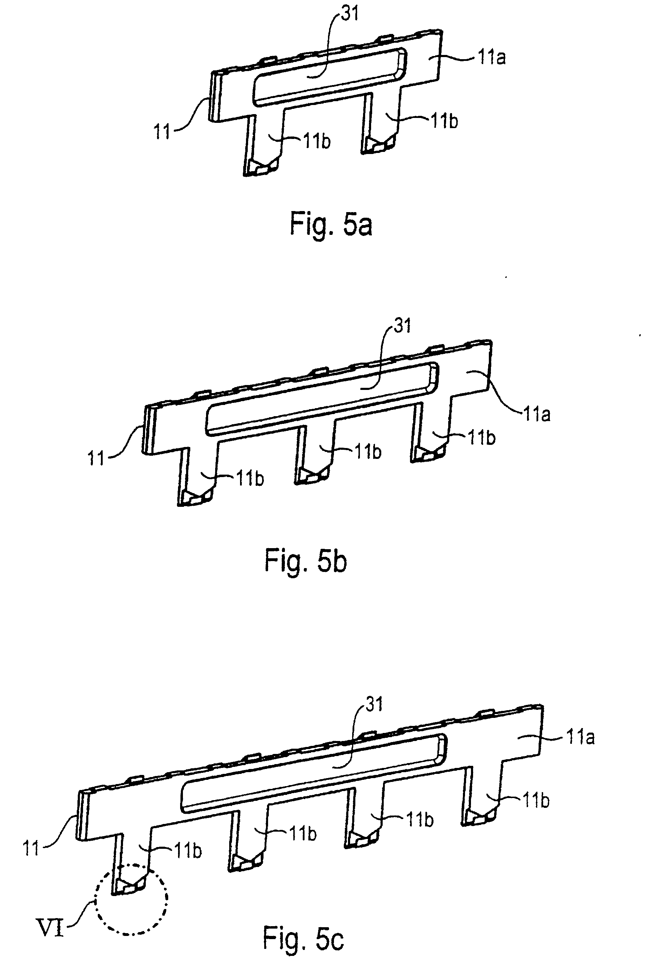

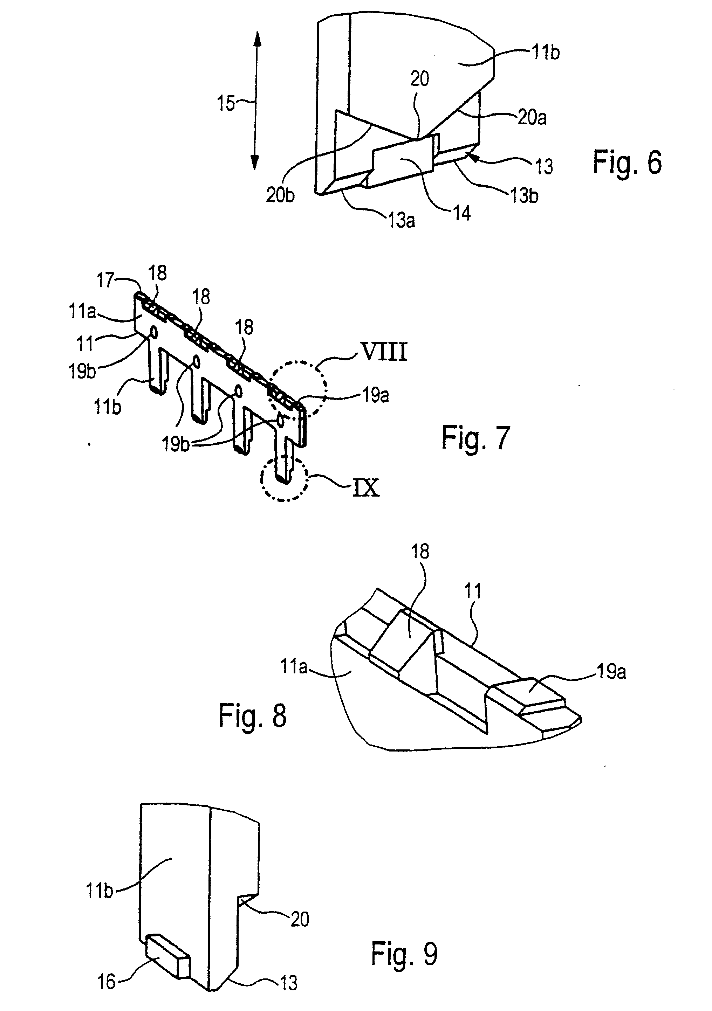

Zur synchronen Betätigung aller Schieberbetätigungen 5 sind diese über ein Koppelteil 11 miteinander verbunden. Das Koppelteil 11 ist dabei - wie in den Figuren 5a bis 5c und 7 dargestellt - kammartig ausgeführt. Es weist an einen Koppelsteg 11a angeformte Fügearme 11b auf, deren Anzahl der Anzahl der zu koppelnden Schieberbetätigungen 5 entspricht. Zur Kopplung zweier Schieberbetätigungen 5 einer zweipoligen Geräteanordnung 1 weist daher gemäß FIG 5a das Koppelteil 11 zwei zueinander beabstandete und im Montage- oder Fügezustand in Betätigungsrichtung 7 verlaufende Fügearme 11b auf, während bei einer dreipoligen oder vierpoligen Geräteanordnung 1 entsprechend ein drei- bzw. vier Fügearme 11b aufweisendes Koppelteil 11 vorgesehen ist. Das Koppelteil 11 ist mit den entsprechenden Schieberbetätigungen 5 vorzugsweise unlösbar gefügt. Dabei liegen die Fügearme 11b in der Fügeverbindung jeweils oberhalb eines von den entsprechenden Schieberbetätigungen 5 freigelassenen Klemmenanschlusses 12 des jeweiligen Reiheneinbaugerätes 2.

Wie aus FIG 6 vergleichsweise deutlich ersichtlich ist, ist jeder Fügearm 11b endseitig einerseits mit einer Schneidenkontur 13 versehen. Die Schneidenkontur 13 ist durch zwei jeweils freiendseitig messerartig geformte Schneidenarme 13a und 13b gebildet, zwischen denen eine Hinterschnittkontur 14 vorgesehen ist. Die beidseitig von den Schneidenarmen 13a und 13b der quer zur Betätigungsrichtung 7 und damit quer zur Längsrichtung 15 des Fügearms 11b verlaufenden Schneidenkontur 13 flankierte Hinterschnittkontur 14 weist einen rückseitig an diese angeformten Quersteg 16 auf, wie dies aus den Figuren 7 und 9 ersichtlich ist.

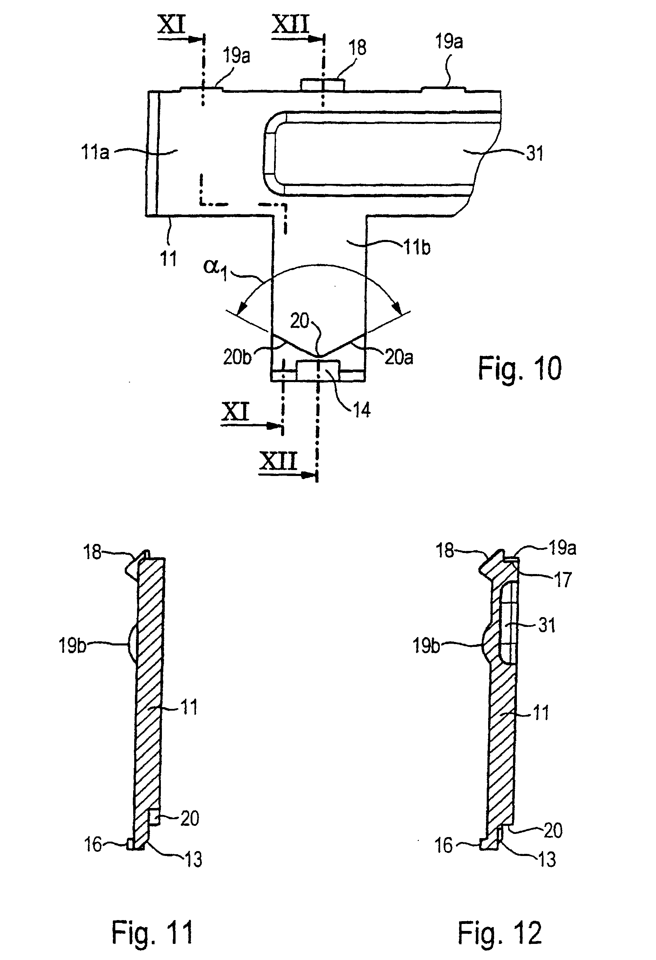

An der den Schneidekonturen 13 gegenüberliegenden Oberkante 17 des Koppelteils 11 sind an den Koppelsteg 11a eine der Anzahl der zu koppelnden Schieberbetätigungen 5 entsprechende Anzahl von Schnappelementen oder Schnapphaken 18 angeformt. Wie aus Figur 8 sowie aus den Figuren 11 und 12 vergleichsweise deutlich ersichtlich ist, ragt jedes Schnappelement 18 rückseitig über den Koppelsteg 11a des Koppelteils 11 hinaus. Beidseitig des Schnappelements 18 sind an den Koppelsteg 11a Klemmnasen 19a angeformt, die die Oberkante 17 des Koppelstegs 11a überragen. Dies ist aus FIG 8 vergleichsweise deutlich ersichtlich. Dabei werden die Klemmnasen 19a von den Schnappelementen 18 wiederum überragt, wie dies aus den Figuren 10 bis 12 ersichtlich ist. Das Koppelteil 11 ist rückseitig vorzugsweise im Bereich jedes Fügearms 11b mit nockenartigen Klemmnasen 19b versehen, die ebenfalls an den Koppelsteg 11a angeformt sind.

Wie aus den Figuren 6 und 10 vergleichsweise deutlich ersichtlich ist, weist jeder Fügearm 11b eine oberhalb der Schneidenkontur 13 endende V-förmige Stützkontur 20 auf, deren Stützschenkel 20a, 20b miteinander einen Winkel α₁ einschließen. Dieser Zentrierwinkel α₁ ist vorzugsweise größer als 90°, z. B. 125°.

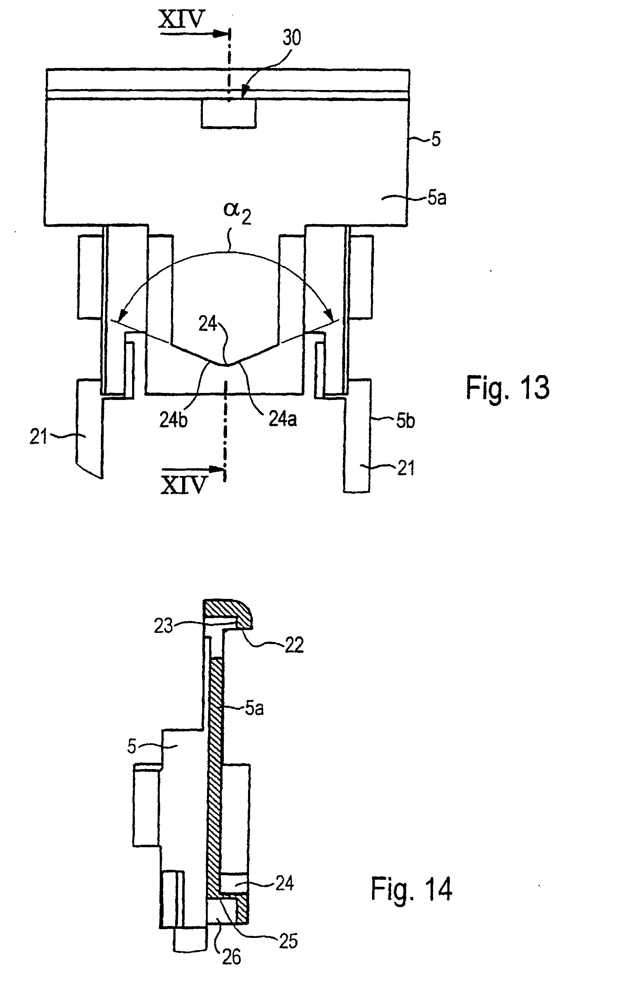

Die Figuren 13 und 14 zeigen die Schieberbetätigung 5 ausschnittsweise in Vorderansicht bzw. im Längsschnitt. Die Schieberbetätigung 5 weist einen oberen Fügeabschnitt 5a und einen unteren Steg- oder Schiebeabschnitt 5b mit zwei im Einbauzustand die Klemmenanschlüsse 12 des entsprechenden Reiheneinbaugerätes 2 flankierenden Stegen oder Holmen 21 auf. Die Stege oder Holme 21 sind in der in dem deutschen Gebrauchsmuster DE 297 10 310 U1 betriebenen und dort dargestellten Art und Weise mit dem jeweiligen Schnappschieber 6 gekoppelt.

Der obere Fügeabschnitt 5a ist zur formschlüssigen Aufnahme des entsprechenden Abschnitts des Koppelteils 11 ausgebildet. Dazu ist der Fügeabschnitt 5a an die Kontur des jeweiligen Abschnitts des Koppelstegs 11a sowie des entsprechenden Fügearms 11b angepasst. Die Schieberbetätigung 5 ist am oberen Freiende mit einer sich über deren gesamte Breite erstreckenden, L-förmigen Anformung nach Art einer klammerartigen Umgreifung 22 mit rückseitiger Sperrkontur 23 versehen. Gegenüberliegend ist eine zur Stützkontur 20 des Fügearms 11b des Koppelteils 11 komplementäre Anlagekontur 24 vorgesehen, die ebenfalls V-förmig ausgeführt ist. Dabei schließen deren Anlageschenkel 24a und 24b wiederum einen Winkel α₂ > 90° ein.

Die Anlagekontur 24 ist dabei als Zentrierkontur ausgebildet, indem der Winkel α₂ größer als der Zentrierwinkel α₁ der Stützkontur 20 des Fügearms 11b ist. Im Bereich der Anlagekontur 24 ist eine quer zur Betätigungsrichtung 7 und damit quer zur Längsrichtung 15 der Fügearme 11b verlaufende, durchtrennbare Membran 25 an der Schieberbetätigung 5 vorgesehen. Diese ist bei einer aus Kunststoff bestehenden Schieberbetätigung 5 als dünne Spritzhaut ausgeführt.

Wie aus FIG 14 ersichtlich ist, begrenzt diese Membrane 25 auf der der L-förmigen Umgreifung 22 gegenüberliegenden Seite eine in Längsrichtung 7 und 15 beidseits offene Aufnahmeausnehmung für den entsprechenden Abschnitt des Koppelteils 11. Die Membran 25 verschließt dabei im ungekoppelten und ungefügten Zustand der Schieberbetätigung 5 einen oberhalb des durch die Stege 21 begrenzten Klemmenanschlussraum liegenden Fügeraum 26 für das Freiende des Fügearms 11b des Koppelteils 11.

In diesem Zustand ist die Schieberbetätigung 5 und der damit gekoppelte Schnappschieber 6 bei jedem einzelnen Reiheneinbaugerät 2 und insbesondere bei einem einpoligen Gerät 2 über die klammerartige Umgreifung 22 betätigbar. Dabei ist der Fügeraum 26 mittels der Membran 25 verschlossen, so dass keine Verunreinigungen an den Klemmenanschluss 12 gelangen können. Auch bei abstandslos aneinander gereihten Geräten 2 können deren Schieberbetätigungen 5 ungehindert bedient und die damit gekoppelten Schnappschieber 6 betätigt werden.

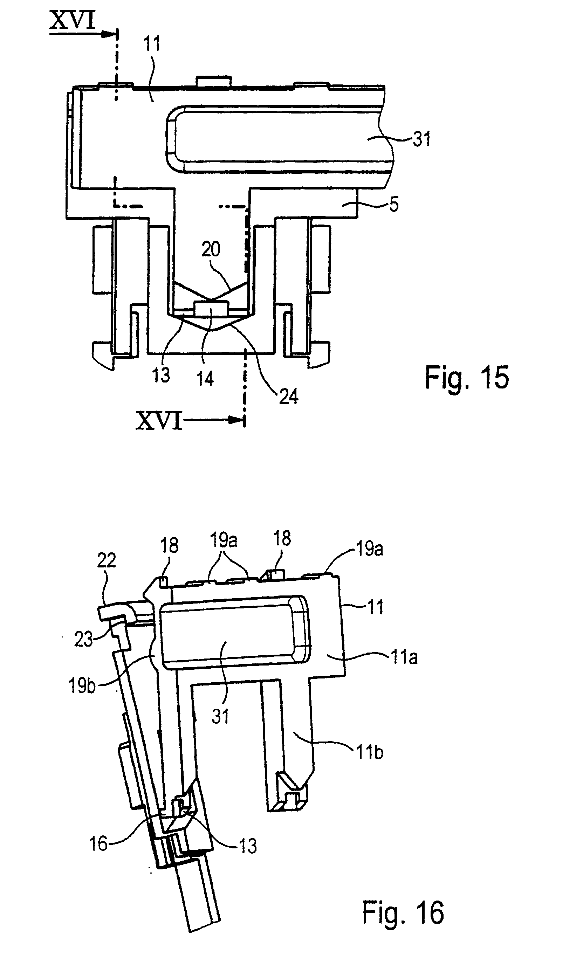

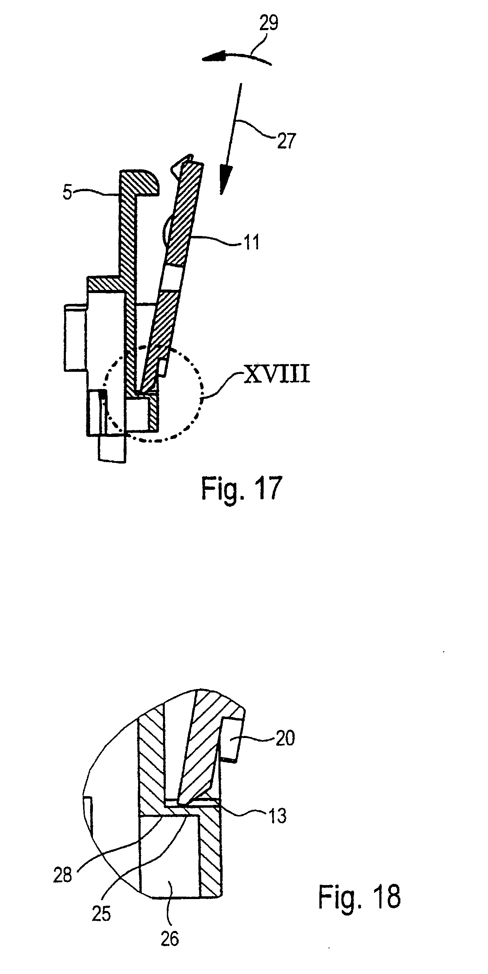

Die Figuren 15 bis 18 zeigen in unterschiedlichen Darstellungen einen ersten Fügeschritt zur Herstellung der Fügeverbindung zwischen dem Koppelteil 11 und der oder jeder synchron zu bedienenden Schieberbetätigung 5. Dabei wird zunächst das Koppelteil 11 derart schräg an den Schieberbetätigungen 5 angesetzt, dass die jeweilige Schneidenkontur 13 des Fügearms 11b an der entsprechenden Membran 25 anliegt (FIG 18). Durch Bewegen des Koppelteils 11 in Fügerichtung 27 (FIG 17) werden die Membranen 25 praktisch gleichzeitig durchtrennt und der jeweilige Fügearm 11b dringt mit dessen Quersteg 16 in den Fügeraum 26 ein.

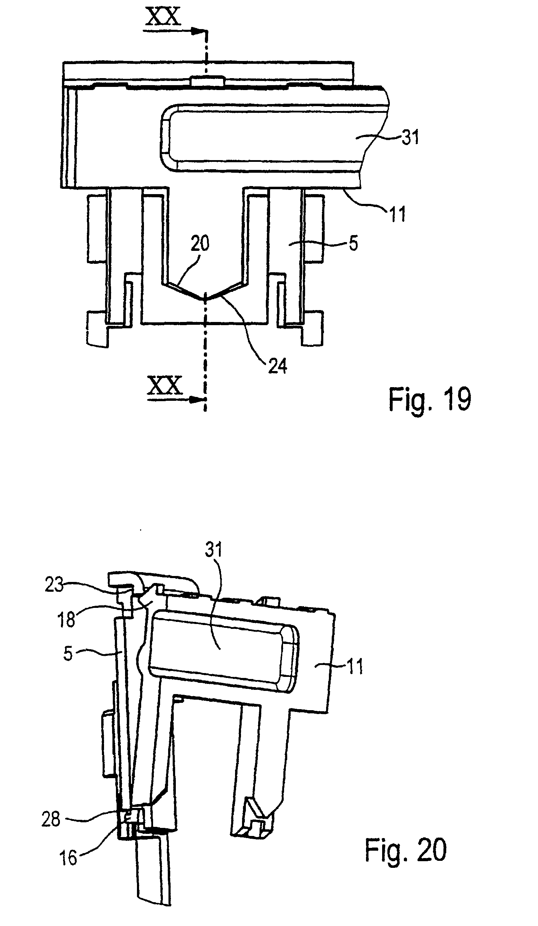

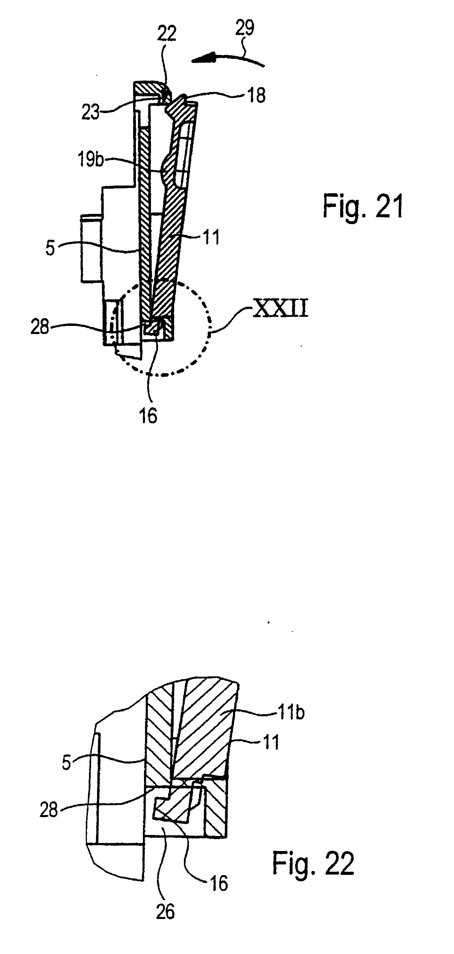

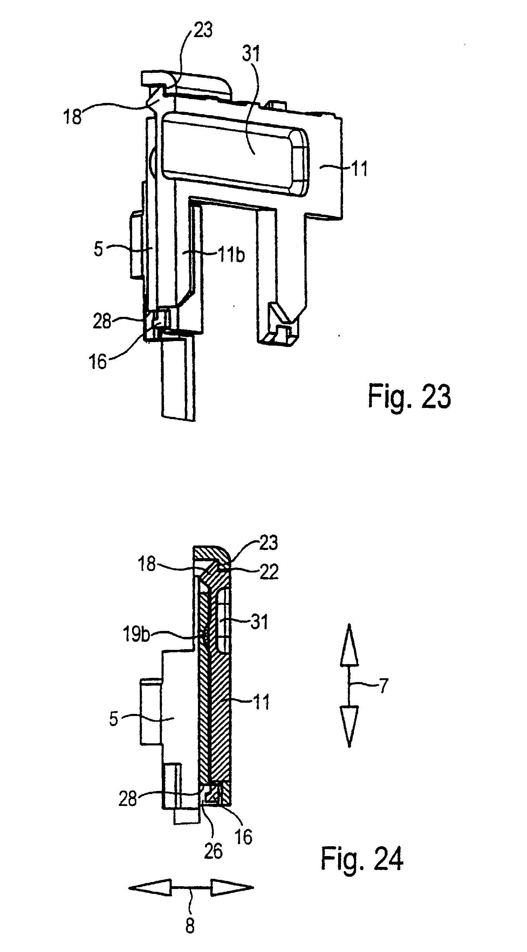

In dieser Steckverbindung hintergreift der jeweilige Quersteg 16 einen korrespondierenden Hinterschnitt oder Anschlag 28 im Bereich der Anlagekontur 24 der Schieberbetätigung 5. Dies ist aus den Figuren 20 bis 22 ersichtlich. Im anschließenden zweiten Fügeschritt in Fügerichtung 29 (Figuren 17 und 21) wird das über die Fügearme 11b in die jeweiligen Schieberbetätigungen 5 eingesteckte Koppelteil 11 mit der Schieberbetätigung 5 verrastet, indem das Schnappelement 18 auf der Oberseite 17 des Koppelstegs 11a die Sperrkontur 23 der jeweiligen Schieberbetätigung 5 hintergreift. Die dadurch hergestellte Fügeverbindung zwischen dem Koppelteil 11 und der oder jeder Schieberbetätigung 5 ist in den Figuren 23 und 24 dargestellt.

Eine formschlüssige Fügeverbindung und damit eine spielfreie synchrone Bewegung der gekoppelten Schieberbetätigungen 5 sowie der damit zusammenwirkenden Schnappschieber 6 der mehrpoligen Geräteanordnung 1 ist dabei durch die Klemmnasen 19a und 19b sichergestellt. Die Klemmnasen 19a spannen dabei das Koppelteil 11 in Längsrichtung 7 vor, während die Klemmnasen 19b das Koppelteil 11 in Querrichtung 8 innerhalb der Fügeverbindung mit der Schieberbetätigung 5 vorspannen. Dadurch ist eine spielfreie Lagerung des Koppelteils 11 in den Schieberbetätigungen 5 sichergestellt. Die Klemmnasen oder Anformungen 19a und 19b gewährleisten somit, dass die Schnappelemente 18 und die Sperrkonturen 23 in der Fügeverbindung des Koppelteils 11 mit den Schieberbetätigungen 5 aufeinander gepresst verharren. Das zur Montage, d. h. zur Herstellung der Fügeverbindung erforderliche Spiel für die Verrastung der Schnappelemente oder Schnapphaken 18 wird über eine Verformung oder Ausnehmung 30 an der jeweiligen Schieberbetätigung 5 infolge der Krafteinwirkung bei der Montage des Koppelteils 11 sichergestellt.

Die symmetrisch neben dem jeweiligen Schnappelement 18 angeordneten Klemm- oder Übermaßnasen 19a bewirken dabei eine symmetrische Krafteinleitung in die Stege oder Holme 21 der Schieberbetätigungen 5. Dies kann zudem dadurch unterstützt werden, dass das Koppelteil 11 besonders biegesteif ausgestaltet ist. Die symmetrische Krafteinleitung gewährleistet dabei eine besonders hohe Leichtgängigkeit der Schieberbetätigungen 5 bei der synchronen Bedienung über das Koppelteil 11, da zusätzliche Reibungen infolge eines Verkantens der Schieberbetätigungen 5 im Führungsbereich vermieden sind.

Zur bedienfreundlichen Betätigung der Schieberbetätigungen 5 weist das Koppelteil 11 im Bereich des Koppelstegs 11a eine in Querrichtung 8 verlaufende wannen- oder muldenförmige Fingermulde 31 als Handhabe auf, die zusätzlich geriffelt sein kann. Dadurch können über das Koppelteil 11 alle synchron bedienten Schieberbetätigungen 5 der Geräteanordnung 1 leichtgängig von Hand bewegt werden. Auch kann ggf. an die Handhabe 31 ein Werkzeug, beispielsweise ein Schraubendreher, angesetzt werden.

Das zur Fertigung der Schieberbetätigung 5 erforderliche Fertigungsmittel, beispielsweise das dazu vorgesehene Spritzwerkzeug, kann im Bereich der Membran 25 ohne zusätzlichen Schieber (Auf-Zu-Werkzeug) ausgeführt werden, um die Öffnung für das Koppelteil 11 zu erzeugen. Dadurch existieren aufgrund des Vorhandenseins der Membran 25 keine aufwendig abzustimmenden Tuschierstellen im Spritzwerkzeug, um die Öffnung für das Koppelteil 11 zu erzeugen. Dies ist besonders bei einer Großserienfertigung mit Mehrfachwerkzeugen ein erheblicher Vorteil. So ist zusätzlich zu einem nur geringen Werkzeugverschleiß eine hohe Verfügbarkeit der Werkzeuge gewährleistet, da keine zusätzlichen bewegten Teile und ein nur geringer Abstimmaufwand der Werkzeughälften besteht. Des weiteren ist ein reibungsloser Fertigungsverlauf aufgrund vergleichsweise gering störanfälliger Werkzeuge sichergestellt.

## Patentansprüche

1. Geräteanordnung mit einer Anzahl von Reiheneinbaugeräten (2), die jeweils mittels eines mit einer Schieberbetätigung (5) zusammenwirkenden Schnappschiebers (6) auf eine Tragschiene (3) aufschnappbar sind, wobei zur synchronen Betätigung mehrerer Schnappschieber (6) deren Schieberbetätigungen (5) miteinander koppelbar sind,
**gekennzeichnet durch**
ein mit den zu koppelnden Schieberbetätigungen (5) verliersicher verbundenes kammartiges Koppelteil (11) mit einem quer zu einer Anzahl von Fügearmen (11b) verlaufenden und diese verbindenden Koppelsteg (11a).

2. Geräteanordnung nach Anspruch 1,
**dadurch gekennzeichnet,**
**dass** das Koppelteil (11) in einer Fügeverbindung an den zu koppelnden Schieberbetätigungen (5) gehalten ist.

3. Geräteanordnung nach Anspruch 1 oder 2,
**dadurch gekennzeichnet,**
**dass** jede Schieberbetätigung (5) eine mit einem am Koppelsteg (11) vorgesehenen Schnappelement (18) zusammenwirkende Sperrkontur (23) und eine zu einer am Fügearm (11b) vorgesehenen Stützkontur (20) komplementären Anlagenkontur (24) aufweist, wobei in der Fügeverbindung der sich der über dessen Stützkontur (20) an der Anlagekontur (24) abstützende Fügearm (11b) lagefixiert ist, und wobei das Schnappelement (18) die Sperrkontur (23) hintergreift.

4. Geräteanordnung nach Anspruch 3,
**dadurch gekennzeichnet,**
**dass** die Anlagekontur (24) und die Stützkontur (20) unter Bildung eines Zentrierwinkels (α₁,α₂) V-förmig ausgeführt sind, wobei der Zentrierwinkel α₁ der Anlagekontur (24) größer ist als der Zentrierwinkel α₂ der Stützkontur (20).

5. Reiheneinbaugerät nach einem der Ansprüche 1 bis 4,
**dadurch gekennzeichnet,**
**dass** der Fügearm (11b) des Koppelteils (11) freiendseitig eine Schneidenkontur (13) aufweist, und dass an der korrespondierenden Schieberbetätigung (5) eine einen Fügeraum (26) verschließende und von der Schneidenkontur (13) durchtrennbare Membran (25) vorgesehen ist.

6. Reiheneinbaugerät nach Anspruch 5,
**dadurch gekennzeichnet,**
**dass** die Schneidenkontur (13) durch zwei Schneidenarme (13a,13b) gebildet ist, die eine Hinterschnittkontur (14) beidseitig flankieren.

7. Reiheneinbaugerät nach einem der Ansprüche 1 bis 6,
**dadurch gekennzeichnet,**
**dass** am Fügearm (11b) freiendseitig ein Quersteg (16) und an der Schieberbetätigung (5) ein Anschlag (28) vorgesehen sind, wobei in der Fügeverbindung der Quersteg (16) den Anschlag (28) hintergreift.

8. Reiheneinbaugerät nach einem der Ansprüche 1 bis 7,
**dadurch gekennzeichnet,**
**dass** das Koppelteil (11) mindestens eine Klemmnase (19a,19b) aufweist derart, dass in der Fügeverbindung das Koppelteil (11) gegenüber der Schieberbetätigung (5) in Längsrichtung (15) des Fügearms (11b) und/oder quer zur Längsrichtung (15) vorgespannt ist.

9. Geräteanordnung nach einem der Ansprüche 1 bis 8,
**dadurch gekennzeichnet,**
**dass** die Schieberbetätigung (5) stegartig ausgebildet ist und einen Klemmenanschlussraum (12) freilässt.

10. Geräteanordnung nach einem der Ansprüche 1 bis 9,
**dadurch gekennzeichnet,**
**dass** das Koppelteil (11) eine wannenförmige, vorzugsweise geriffelte, Fingermulde (31) als Handhabe aufweist.

## Claims

1. Device arrangement with a number of series installation devices (2) which can be snapped onto a mounting rail (3) in each case by means of a snap-action slide (6) interacting with a slide actuating means (5), it being possible, for the synchronous actuation of a plurality of snap-action slides (6), for the slide actuating means (5) of the latter to be coupled to one another, **characterised by** a comb-like coupling part (11) which is connected in captive fashion to the slide actuating means (5) which are to be coupled and which has a coupling web (11a) which runs transversely to a number of joining arms (11b) and connects the latter.

2. Device arrangement according to Claim 1, **characterised in that**, in a joining connection, the coupling part (11) is retained on the slide actuating means (5) which are to be coupled.

3. Device arrangement according to Claim 1 or 2, **characterised in that** each slide actuating means (5) has a blocking contour (23), which interacts with a snap-action element (18) provided on the coupling web (11), and an abutment contour (24), which complements a supporting contour (20) provided on the joining arm (11b), it being the case that, in the joining connection, the joining arm (11b), which is supported on the abutment contour (24) via its supporting contour (20) is fixed in position, and that the snap-action element (18) engages behind the blocking contour (23).

4. Device arrangement according to Claim 3, **characterised in that** the abutment contour (24) and the supporting contour (20) are configured in the form of a V with a centring angle (α₁, α₂) being formed in the process, the centring angle α₁ of the abutment contour (24) being greater than the centring angle α₂ of the supporting contour (20).

5. Series installation device according to one of Claims 1 to 4, **characterised in that** the joining arm (11b) of the coupling part (11) has a cutting-edge contour (13) at the free end, and **in that** provided on the corresponding slide actuating means (5) is a membrane (25) which closes a joining space (26) and can be severed by the cutting-edge contour (13).

6. Series installation device according to Claim 5, **characterised in that** the cutting-edge contour (13) is formed by two cutting-edge arms (13a, 13b) which flank an undercut contour (14) on both sides.

7. Series installation device according to one of Claims 1 to 6, **characterised in that** a transverse web (16) is provided at the free end of the joining arm (11b) and a stop (28) is provided on the slide actuating means (5), it being the case that, in the joining connection, the transverse web (16) engages behind the stop (28).

8. Series installation device according to one of Claims 1 to 7, **characterised in that** the coupling part (11) has at least one clamping nose (19a, 19b) such that, in the joining connection, the coupling part (11) is prestressed in relation to the slide actuating means (5) in the longitudinal direction (15) of the joining arm (11b) and/or transversely to the longitudinal direction (15).

9. Device arrangement according to one of Claims 1 to 8, **characterised in that** the slide actuating means (5) is of web-like design and leaves free a terminal-. connection space (12).

10. Device arrangement according to one of Claims 1 to 9, **characterised in that** the coupling part (11) has a trough-like, preferably corrugated, finger hollow (31) as a hand grip.

## Revendications

1. Agencement d'appareils comportant une pluralité d'appareils encastrés en série (2) qui peuvent chacun être encliquetés sur un profilé support (3) au moyen d'un coulisseau d'encliquetage (6) coopérant avec un dispositif d'actionnement à coulisseau (5), les dispositifs d'actionnement à coulisseau (5) pouvant être couplés entre eux pour l'actionnement synchrone de plusieurs coulisseaux d'encliquetage (6) ;
**caractérisé par**
une pièce de couplage (11) en forme de peigne reliée de manière imperdable aux dispositifs d'actionnement à coulisseau (5) à coupler et comportant une traverse de couplage (11a) s'étendant transversalement à une pluralité de bras d'assemblage (11b) et reliant ceux-ci.

2. Agencement d'appareils selon la revendication 1,
**caractérisé en ce**
**que** la pièce de couplage (11), dans un assemblage, est maintenue sur les dispositifs d'actionnement à coulisseau (5) à coupler.

3. Agencement d'appareils selon la revendication 1 ou 2,
**caractérisé en ce**
**que** chaque dispositif d'actionnement à coulisseau (5) présente un profil de blocage (23) coopérant avec un élément d'encliquetage (18) prévu sur la traverse de couplage (11a) et un profil d'appui (24) complémentaire d'un profil de support (20) prévu sur le bras d'assemblage (11b), le bras d'assemblage (11b), qui prend appui par son profil de support (20) contre le profil d'appui (24), étant bloqué en position dans l'assemblage et l'élément d'encliquetage (18) passant derrière le profil de blocage (23).

4. Agencement d'appareils selon la revendication 3,
**caractérisé en ce**
**que** le profil d'appui (24) et le profil de support (20) sont réalisés en V et forment un angle au centre (α₁, α₂), l'angle au centre (α₁) du profil d'appui (24) étant supérieur à l'angle au centre (α₂) du profil de support (20).

5. Appareil encastré en série selon l'une des revendications 1 à 4,
**caractérisé en ce**
**que** le bras d'assemblage (11b) de la pièce de couplage (11) présente un profil en tranchant (13) du côté de l'extrémité libre et qu'une membrane (25) qui ferme l'espace d'assemblage (26) et peut être percée par le profil en tranchant (13) est prévue sur le dispositif d'actionnement à coulisseau (5) correspondant.

6. Appareil encastré en série selon la revendication 5,
**caractérisé en ce**
**que** le profil en tranchant (13) est formé par deux bras de tranchant (13a, 13b) qui bordent des deux côtés un profil en contre-dépouille (14).

7. Appareil encastré en série selon l'une des revendications 1 à 6,
**caractérisé en ce**
**qu'**une nervure transversale (16) est prévue sur le bras d'assemblage (11b) du côté de l'extrémité libre et une butée (28) est prévue sur le dispositif d'actionnement à coulisseau (5), la nervure transversale (16), dans l'assemblage, passant derrière la butée (28).

8. Appareil encastré en série selon l'une des revendications 1 à 7,
**caractérisé en ce**
**que** la pièce de couplage (11) présente au moins un taquet de blocage (19a, 19b) de telle sorte que dans l'assemblage, la pièce de couplage (11) est précontrainte par rapport au dispositif d'actionnement à coulisseau (5) dans la direction longitudinale (15) du bras d'assemblage (11b) et/ou transversalement à la direction longitudinale (15).

9. Agencement d'appareils selon l'une des revendications 1 à 8,
**caractérisé en ce**
**que** le dispositif d'actionnement à coulisseau (5) est réalisé comme une traverse et laisse dégagé un espace de borne de connexion (12).

10. Agencement d'appareils selon l'une des revendications 1 à 9,
**caractérisé en ce**
**que** la pièce de couplage (11) présente un creux (31) en forme de cuvette, de préférence cannelé, qui sert de prise pour les doigts.
